Europäisches Patentamt

**European Patent Office**

**Office européen des brevets**

(11) Numéro de publication: **0 012 425**
A1

# (12) DEMANDE DE BREVET EUROPEEN

(21) Numéro de dépôt: **79105090.9**

(22) Date de dépôt: **11.12.79**

(51) Int. Cl.³: **C 21 D 7/04**, B 23 P 9/04, B 25 D 17/02

(30) Priorité: **18.12.78 FR 7835518**

(43) Date de publication de la demande: **25.06.80**
**Bulletin 80/13**

(84) Etats contractants désignés: **BE CH DE FR GB IT NL**

(71) Demandeur: **Société Anonyme dite:
ALSTHOM-ATLANTIQUE, 38, Avenue Kléber,
F-75784 Paris Cedex 16 (FR)**

(72) Inventeur: **Coulon, André, 1 rue des Bleuets,
F-90160 Bessoncourt (FR)**
Inventeur: **Leymonie, Claude, 12 avenue Jean Jaurès,
F-90000 Belfort (FR)**

(74) Mandataire: **Weinmiller, Jürgen et al, Zeppelinstrasse 63,
D-8000 München 80 (DE)**

(54) **Procédé de traitement d'une paroi en acier inoxydable austénitique et appareil à percussion pour l'application de ce procédé.**

(57) Procédé de traitement d'une paroi en acier inoxydable austénitique et appareil à percussion pour l'application de ce procédé. On écrouit le métal à l'aide d'un appareil à percussion dont l'outil (2) est terminé par une partie sphérique en acier très dur (1) dont le diamètre est supérieur à 2 mm, de préférence compris entre 6 et 8 mm, l'outil (2) étant dirigé perpendiculairement à la paroi.

Le métal présente, spécialement dans les couches sous-jacentes de la peau, des contraintes de compression, ce qui permet, en présence d'agents corrosifs et de contraintes de traction de service, d'éviter les risques de fissuration de ce métal.

Application dans les tuyauteries de grandes dimensions dans l'industrie nucléaire.

## Procédé de traitement d'une paroi en acier inoxydable austénitique et appareil à percussion pour l'application de ce procédé

La présente invention a trait à un procédé de traitement d'une paroi en acier inoxydable austénitique et à un appareil servant à l'application de ce procédé.

On sait que de tels aciers qui sont employés dans l'industrie et en particulier dans la construction nucléaire présentent l'inconvénient majeur d'une susceptibilité à la corrosion fissurante sous tension, lorsque les deux conditions suivantes sont réunies :

- Présence d'agents corrosifs,

- Existence de contraintes de traction parallèlement à la paroi.

La corrosion sous tension se manifeste généralement par l'apparition brutale de fissures se présentant fréquemment en réseau, pouvant traverser l'élément de construction concerné de part en part et conduisant à sa destruction, bien souvent avant toute détection.

Pour supprimer le risque de corrosion sous tension, il est nécessaire de supprimer ou en tous cas de diminuer les contraintes de traction.

La relaxation par des moyens thermiques des contraintes résiduelles dus à la fabrication (formage, soudage) impose un maintien à haute température (au moins 950°C) qui peut conduire à la déformation des pièces, à moins que des précautions coûteuses ne soient prises.

Pour annuler les contraintes de traction qui se développent parallèlement à la paroi pendant la fabrication, il est connu d'employer un procédé de grenaillage (en anglais shot-peening) qui consiste à projeter à grande vitesse des billes d'acier perpendiculairement à la paroi.

Grâce à ce procédé, non seulement les contraintes de traction disparaissent mais elles font place sur la paroi ainsi traitée à des contraintes de compression parallèles à la paroi.

Lorsqu'en service la paroi est soumise à des cycles alternés de contraintes on peut observer une relaxation de la précontrainte de compression, ce qui se traduit soit par une diminution, soit même une extinction de celle-ci.

Il s'ensuit qu'en présence d'agents corrosifs il peut se produire des fissurations.

Le procédé selon l'invention permet de réduire ce risque.

Le procédé de traitement d'une paroi inoxydable selon l'invention est caractérisé en ce que l'on écrouit le métal à l'aide d'un appareil à percussion dont l'outil est terminé par une partie sphérique en acier très dur dont le diamètre est supérieur à 2 mm, l'outil étant dirigé perpendiculairement à la paroi.

Grâce au procédé selon l'invention, les contraintes de compression induites dans la surface de la paroi ont sensiblement la même intensité que par la méthode de grenaillage. Mais dans les couches sous-jacentes les contraintes induites sont nettement supérieures aux contraintes de surface lorsque le procédé selon l'invention est employé.

Lorsqu'il se produit une relaxation des contraintes induites, la surface du métal peut se retrouver sans contraintes induites, mais le métal sous-jacent comporte toujours des contraintes résiduelles. Ainsi en présence d'agents corrosifs, il peut y avoir, en service, amorçage de fissure sur la surface après relaxation, mais les risques de pénétration de cette fissure seront considérablement diminués puisque les couches sous-jacentes du métal conservent des contraintes de compression.

Selon une réalisation préférée de l'invention, le diamètre de la partie sphérique terminant l'outil de l'appareil à percussion est compris entre 6 et 8 mm.

L'appareil à percussion lui-même peut être un pistolet qui comporte une arrivée d'air comprimé servant à imprimer un mouvement de percussion à un outil terminé par une partie sphérique dont le diamètre est supérieur à 2 mm et de préférence compris entre 6 et 8 mm.

Le traitement selon l'invention est particulièrement adapté aux tuyauteries de grande dimension en acier inoxydable austénitique pour traiter les parties affectées thermiquement (ZAT) telles que les soudures d'envirolage ou de raboutage d'éléments entre eux.

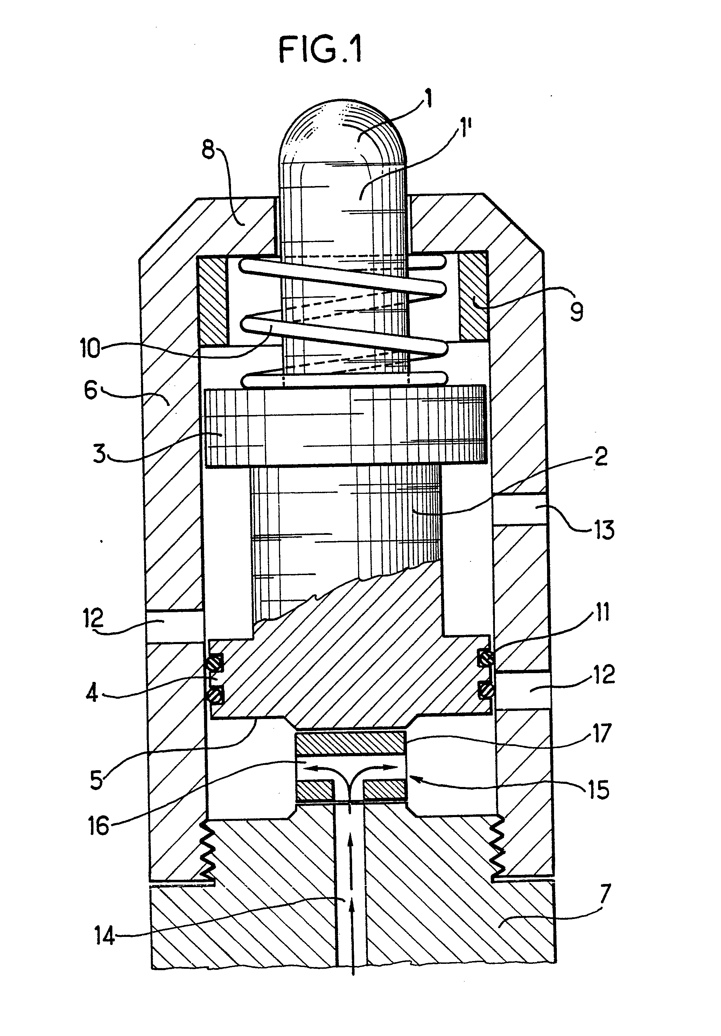

La présente invention sera mieux comprise à la lumière de la description qui va suivre et du dessin dans lequel
- la figure 1 représente en coupe un appareil à percussion permettant d'appliquer le procédé de traitement selon l'invention,

- la figure 2 représente le profil des contraintes en fonction de la profondeur des parois traitées par un procédé connu et par le procédé selon l'invention,

- la  figure 3 représente la profondeur du maximum de contraintes en fonction du diamètre de la bille ayant servi au traitement.

L'impact est créé par une demi-bille 1 en acier à roulements disposée à l'extrémité cylindrique d'un outil 2 comportant deux épanouissements 3, 4 servant au guidage ainsi qu'un fond 5 servant de piston. La partie arrière de l'outil comprenant les deux épanouissements est emprisonnée à l'intérieur d'une enveloppe 6 fixée sur la tête d'un pistolet 7.

Le sommet de cette enveloppe 6 est muni d'un orifice circulaire laissant passer la demi-bille 1 et l'extrémité 1' de l'outil. Sur le sommet est fixée une bague 9, qui permet de régler la course de la demi-bille 1, car l'épanouissement 3 peut buter contre la bague.

La demi-bille est ramenée par un ressort 10 disposé entre le sommet 8 et l'épanouissement 3.

Le second épanouissement 4 est muni de bagues d'étanchéité 11 glissant le long de la paroi interne de l'enveloppe 6.

Des trous 12 servant à l'éjection de l'air lorsque le piston est en fin de course sont pratiqués dans l'enveloppe. Un autre trou 13 est pratiqué dans l'enveloppe pour permettre l'évacuation de l'air pris entre les deux épanouissements de guidage 3, 4.

Sur l'arrivée de gaz comprimé pulsé 14 du pistolet on ajoute un gicleur 15 à air comprimé comportant latéralement deux fentes en croix 16 et dans sa partie supérieure une face 17 servant de butée au fond 5.

Le fonctionnement de l'appareil à percussion est le suivant. On dirige l'outil perpendiculairement à la paroi métallique à traiter. La demi-bille vient frapper la paroi au moins 3000 fois par minute, sans risque de déchirures, même en cas d'erreur d'orientation. La pénétration des demi-billes est constante et peut-être réglée grâce à la bague.

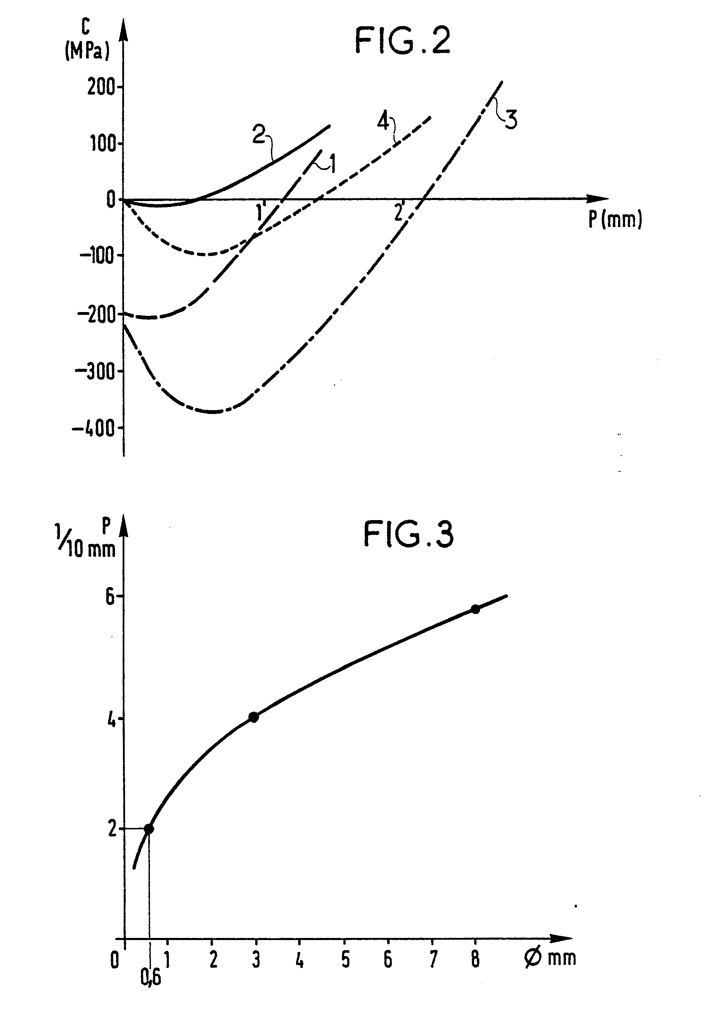

La figure 2 représente les courbes d'intensité des contraintes induites en fonction de la profondeur P perpendiculairement à la surface de la paroi.

Les contraintes positives correspondent aux contraintes de traction et les contraintes négatives aux contraintes de compression.

La courbe 1 représente la courbe des contraintes en fonction de la profondeur lorsque la paroi a été soumise au grenaillage classique.

La courbe 2 représente la courbe des contraintes dans cette paroi traitée par le grenaillage lorsqu'elle est soumise, en service, à des contraintes qui entraînent une relaxation des contraintes induites.

La courbe 3 représente la courbe des contraintes dans la paroi soumise au traitement selon l'invention.

La courbe 4 représente la courbe des contraintes dans la paroi traitée selon l'invention lorsqu'elle est soumise, en service, à des contraintes qui entrainent une relaxation des contraintes induites dans la surface.

On observe avant relaxation (courbes 1 et 3) qu'à même intensité étalon (appelée intensité ALMEN) la contrainte de compression est sur la peau d'un niveau sensiblement identique avec les deux procédés. Par contre les maxima de compression sont beaucoup plus importants avec le procédé selon l'invention qu'avec le grenaillage à billes.

De plus, la couche mise en compression est plus profonde avec le procédé selon l'invention.

Lorsque la paroi est mise en service et que la contrainte de traction est supérieure ou égale à la contrainte de compression induite, il se produit après un certain temps, une relaxation par un phénomène oligo-cyclique atténuant plus ou moins complètement les effets de l'écrouissage par grenaillage à bille.

Avec le traitement selon l'invention, les contraintes résiduelles dans les couches sous-jacentes, même au cas où aucune contrainte ne subsiste dans la peau de la paroi, ont pour effet de limiter les risques de formation de fissures en présence d'agents corrosifs.

Sur la figure 3 on a représenté la courbe donnant la profondeur P du maximum de la contrainte en fonction du diamètre de la bille employée lors du traitement.

On a placé également le point correspondant au grenaillage par bille ayant un diamètre de 0,6 mm et dont le minimum de contrainte est à une profondeur de 0,2 mm.

On remarque sur cette courbe que les valeurs comprises entre 6 et 8 mm donnent un bon écrouissage en profondeur. On ne peut guère dépasser 8 mm car les difficultés de mise en oeuvre demeurent alors trop grandes pour obtenir une valeur suffisante de l'écrouissage en profondeur.

REVENDICATIONS

1/ Procédé de traitement d'une paroi en acier inoxydable austénitique lui permettant de supporter la présence d'agents corrosifs et des contraintes de traction dans une direction parallèle à la paroi, caractérisé en ce que l'on écrouit préalablement le métal à l'aide d'un appareil à percussion dont l'outil (2) est terminé par une partie sphérique (1) en acier très dur dont le diamètre est supérieur à 2 mm, l'outil (2) étant dirigé perpendiculairement à la paroi.

2/ Procédé de traitement selon la revendication 1, caractérisé en ce que le diamètre de la partie sphérique (1) est compris entre 6 et 8 mm.

3/ Appareil à percussion pour l'application du procédé selon l'une des revendications 1 et 2 comprenant une arrivée d'air comprimé servant à imprimer un mouvement de percussion à un outil, caractérisé en ce que ledit outil (2) est terminé par une partie sphérique (1) dont le diamètre est supérieur à 2 mm.

4/ Appareil à percussion selon la revendication 3, caractérisé en ce que le diamètre est compris entre 6 et 8 mm.

5/ Appareil à percussion selon l'une des revendications 3 et 4, caractérisé en ce que l'outil (2) coulisse à l'intérieur d'une enveloppe cylindrique (6) fixée à l'appareil (7) qui est munie de moyens (9) limitant la course de l'outil (2).

# FIG.1

2/2

0012425

FIG.2

FIG.3

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée |
|---|---|---|
| X | US - A - 3 937 055 (V.P. CARUSO et al. ) <br> * Claims; figures * <br><br> -- | 3 |
| A | FR - A - 800 143 (STANDARD OIL DEVELOPMENT CO.) | |
| A | FR - A - 1 353 544 (STE METALLUR-GIQUE G. JEUDY) | |
| A | FR - A - 2 266 137 (KRAFTWERK UNION) | |
| A | FR - A - 2 318 229 (NIPPON KOKAN) <br><br> ---- | |

**CLASSEMENT DE LA DEMANDE (Int. Cl. 3)**

C 21 D 7/04
B 23 P 9/04
B 25 D 17/02

**DOMAINES TECHNIQUES RECHERCHES (Int. Cl. 3)**

C 21 D 7/04
B 23 P 9/04

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 21-03-1980 | MOLLET |

OEB Form 1503.1  06.78